Europäisches Patentamt

European Patent Office

Office européen des brevets

(19)

(11) Veröffentlichungsnummer : **0 472 124 B1**

## (12) EUROPÄISCHE PATENTSCHRIFT

(45) Veröffentlichungstag der Patentschrift :
**19.01.94 Patentblatt 94/03**

(51) Int. Cl.$^5$ : **C02F 1/72**

(21) Anmeldenummer : **91113767.7**

(22) Anmeldetag : **16.08.91**

(54) **Katalytische Oxidation von Abwasser.**

(30) Priorität : **24.08.90 DE 4026831**

(43) Veröffentlichungstag der Anmeldung :
**26.02.92 Patentblatt 92/09**

(45) Bekanntmachung des Hinweises auf die
Patenterteilung :
**19.01.94 Patentblatt 94/03**

(84) Benannte Vertragsstaaten :
**AT BE CH DE FR GB IT LI SE**

(56) Entgegenhaltungen :
**EP-A- 0 086 592**
**EP-A- 0 378 888**
**PATENT ABSTRACTS OF JAPAN vol. 14, no.**
**265 (C-726)(4208) 08.06.90**

(73) Patentinhaber : **EMS-INVENTA AG**
**Selnaustrasse 16**
**CH-8001 Zürich (CH)**

(72) Erfinder : **Grätzel, Michael, Prof. Dr. rer. nat.**
**habil.**
**Chemin du Marquisat**
**CH-1025 St. Sulpice/VD (CH)**

EP 0 472 124 B1

## Beschreibung

Die Erfindung betrifft ein durch Eisen-III-Salze katalysiertes Verfahren zum Abbau von organischen Substanzen durch Wasserstoffperoxid in Abwasser, besonders von organischen Inhaltsstoffen in Industrieabwässern.

Mit organischen Inhaltsstoffen beladene Abwässer werden nach dem Stand der Technik mit Schwermetall oder speziell Eisensalzen und Wasserstoffperoxid behandelt, wobei der Abbau jedoch sehr unvollständig bleibt und mehrheitlich zu ausgeflockten oder ausflockbaren Abbauprodukten führt, wie z.B. in DE-A 2 929 911, DE-A 2 641 094 oder auch JP-A 52 016 865 beansprucht.

R.W. Matthews, Solar Energie 38/6,405-413 (1987) und DE-A 2 729 760 behandeln die photokatalytische Wirkung von Titan- und Siliziumdioxid ohne Wasserstoffperoxid sowie Zinkoxid. Diesen Lehren ist keinerlei Hinweis auf Eisenverbindungen zu entnehmen.

Es bestand somit die Aufgabe, ein Verfahren, das den Abbau von organischen Inhaltsstoffen besonders in Bezug auf den zeitlichen Ablauf, die Ausbeute und die sogenannte Karbonisierung in flüchtige Abbauprodukte, deutlich verbessert, zu entwickeln.

Diese Aufgabe wird gelöst durch das Verfahren zur durch Eisen-III-Salze katalysierten Oxidation von organischen Inhaltsstoffen in Abwasser gemäss den kennzeichnenden Merkmalen des Anspruchs 1, dem Verfahren unter Verwendung von Titandioxid und Belichtung in Kombination beziehungsweise dem Verfahren unter Verwendung von Eisen-III-Sulfat und Titandioxid in Kombination zur katalytischen Oxidation von Abwasser durch Wasserstoffperoxid.

Sie wird im speziellen gelöst durch die Verwendung von Titandioxid und Licht in dieser durch Eisen-III-Salze katalysierten Oxidation von industriellen organischen Fremd- und Abfallstoffen in Abwässern durch Wasserstoffperoxid zu Kohlendioxid.

Es ist ein wesentlicher Vorteil des erfindungsgemässen Verfahrens, dass die durch Eisen-III-Salze, insbesondere durch Eisen-III-Sulfat, bewirkte Oxidation der organischen Inhaltsstoffe durch Titandioxid als Photokatalysator in unerwarteter Weise synergistisch beschleunigt und bereits bei Temperaturen unter 80°C, bevorzugt bei 20 bis 75°C und besonders bevorzugt bei 45 bis 60°C, möglich wird und wobei selbst im Dunkeln hohe Ausbeuten erreicht werden.

Dabei werden die Eisen-III-Salze in Konzentrationen von $0.1 \times 10^{-3}$ bis 1 Mol pro Liter Abwasser, bevorzugt von $0.1 \times 10^{-2}$ bis $0.1 \times 10^{-1}$ Mol pro Liter eingesetzt.

Das Wasserstoffperoxid wird mit einer Konzentration von maximal 0.5 Mol pro Liter Abwasser, bevorzugt von 0.3 Mol pro Liter eingesetzt.

In einer bevorzugten Ausführungsform erfolgt die Zugabe schrittweise in Mengen von 0.1 Mol pro Liter Abwasser.

Ein weiterer Vorteil der Verfahren liegt darin, dass diese Oxidation durch die Kombination mit Lichtanregung zusätzlich deutlich beschleunigt werden kann.

Schliesslich wird auch die photokatalytische Wirkung des Titandioxids in der Oxidation durch Eisen-III-Salze in unerwarteter Weise synergistisch verstärkt. Die bevorzugte Menge des zugesetzten Titandioxids liegt bei maximal 10 g pro Liter Abwasser.

Das erfindungsgemässe Verfahren zeichnet sich in besonderer Weise durch den Einsatz von Titandioxid und Licht als kit-of-parts beziehungsweise durch den Einsatz von Eisen-III-Salzen und Titandioxid als kit-of-parts aus.

Als besonders wichtiger Vorteil gilt, dass die erfindungsgemässen Katalysatoren und das Oxidationsmittel ökologisch unbedenklich sind.

In den folgenden Beispielen wird ein mit Nebenprodukten aus der Herstellung von Nitro-ortho-xylol (NOX) beladenes Chemie-Abwasser gereinigt.

Organische Fremdstoffe werden dabei als TOC-Werte (total organic carbon) in mg/l oder ppm bestimmt.

Damit wird die erfindungsgemässe Verwendung von Eisen-III-Salzen und Titandioxid in Kombination für die katalytische Oxidation von organischen Inhaltsstoffen in Abwässern ebenso wie die kombinierte Verwendung von Titandioxid und Licht in der durch Eisen-III-Salze katalysierten Oxidation solcher Abwässer in unerwarteter Weise wirksam.

Zur Erläuterung der Versuche dienen Figur 1 bis 4

Figur 1      Abbau von Inhaltsstoffen in unverdünnten NOX-Abwasser durch $H_2O_2$

Figur 2      Abbau von Inhaltsstoffen in unverdünnten NOX-Abwasser durch $H_2O_2$

Figur 3      Abbau von Inhaltsstoffen in unverdünnten NOX-Abwasser durch $H_2O_2$ in Gegenwart von Eisen-III-sulfat

Figur 4      Abbau von Inhaltsstoffen in unverdünnten NOX-Abwasser in Gegenwart von Titandioxid.

Vergleichsbeispiel 1

**Thermischer Abbau von Schadstoffen in unverdünntem Abwasser**

Die Versuche wurden bei 50°C durchgeführt. Die zeitliche Abnahme der organischen Verunreinigungen wurde durch Bestimmung des TOC Wertes verfolgt. Die Zugabe des Oxidationsmittels $H_2O_2$ erfolgte stufenweise. Die $H_2O_2$-Konzentration lag anfänglich bei 0.1 Mol/l und wurde dann durch Zugabe von jeweils 0.1 Mol/l nach ein und zwei Stunden Reaktionszeit auf insgesamt 0.3 Mol/l erhöht. In Gegenwart von $5 \times 10^{-3}$ Mol/l $Fe_2(SO_4)_3$ hatte der TOC Gehalt nach zwei Stunden Reaktionszeit, d.h. noch vor Zugabe der dritten Charge an $H_2O_2$ bereits von anfänglich 3500 ppm auf 1300 ppm abgenommen. Ohne Eisenkatalysator nahm der TOC-Gehalt im gleichen Zeitraum um weniger als 10% ab.

Beispiel 2

**Kombination des thermischen und photokatalytischen Verfahrens zum Abbau von organischen Schadstoffen im NOX Abwasser**

Besonders gute Erfolge wurden mit der erfindungsgemässen Kombination des thermisch photolytischen Verfahrens erzielt. Diese Versuche wurden im Photoreaktor bei etwa 70°C mit 100 ml Lösung durchgeführt. Zunächst wurde während zwei Stunden im Dunkeln erwärmt. Daran schloss sich die Belichtungsphase an mit einer 100 Watt Xenon-Mercury-Leuchte. Der Abbau der organischen Verunreinigungen wurde sowohl durch Messung der TOC Werte als auch anhand der optischen Dichte der Lösung bei verfolgt. Dabei bedeutet "ABSORPTION 310NM" exakt die durch die Abwasser-Probe verursachte Extinktion von Licht der Wellenlänge 310nm, welche durch die Konzentration des Lichtabsorbierenden Stoffes c, die optische Wellenlänge l und den dekadischen Extinktionskoeffizienten $\varepsilon$ als optische Dichte nach dem Lambert-Beer'schen Gesetz definiert ist:

$$OD = \varepsilon \times l \times c$$

In den beigefügten Abbildungen werden die TOC-Werte durch gefüllte Symbole und die Absorptionswerte durch offene Symbole angegeben.

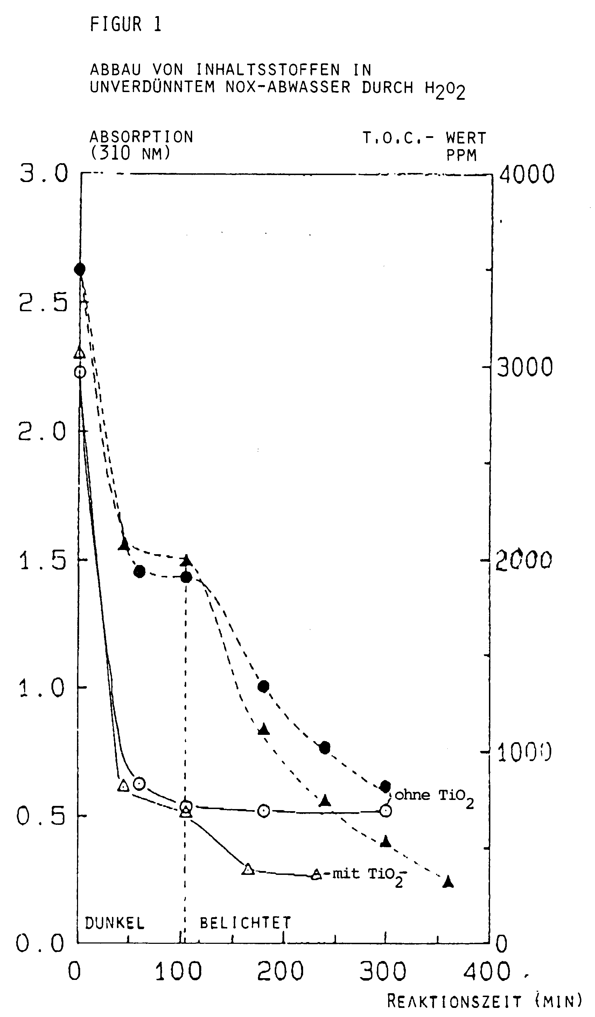

In Figur 1 wurden die Dunkelreaktionen in Abwesenheit von $TiO_2$ durchgeführt. Die Lösung enthielt, abgesehen von 0.3 Mol/l $H_2O_2$, noch $5 \times 10^{-3}$ Mol/l Eisen-III-Sulfat als Katalysator. Unter diesen Bedingungen ging der TOC-Gehalt des Wassers innerhalb von 50 Minuten von 3500 auf 2000 mg/l zurück. In der zweiten Stunde brachte die Dunkelreaktion wenig Aenderung des TOC-Gehaltes.

Durch nachfolgende Beleuchtung wurde der TOC-Abbau stark beschleunigt. Interessanterweise ist der photokatalytische Effekt selbst in Abwesenheit von $TiO_2$ deutlich erkennbar (Kreise in Fig. 1). Dies deutet auf Beteiligung von Eisenionen oder Eisenoxid an der Photoreaktion hin. Durch Zugabe von 10 g/l $TiO_2$ (Dreiecke in Fig. 1) wird eine Beschleunigung des photolytischen Abbaus erzielt. Nach drei- bis vierstündiger Bestrahlung ist der TOC-Wert bereits auf weniger als 1/10 des Anfangsgehaltes abgesunken.

Beispiel 3

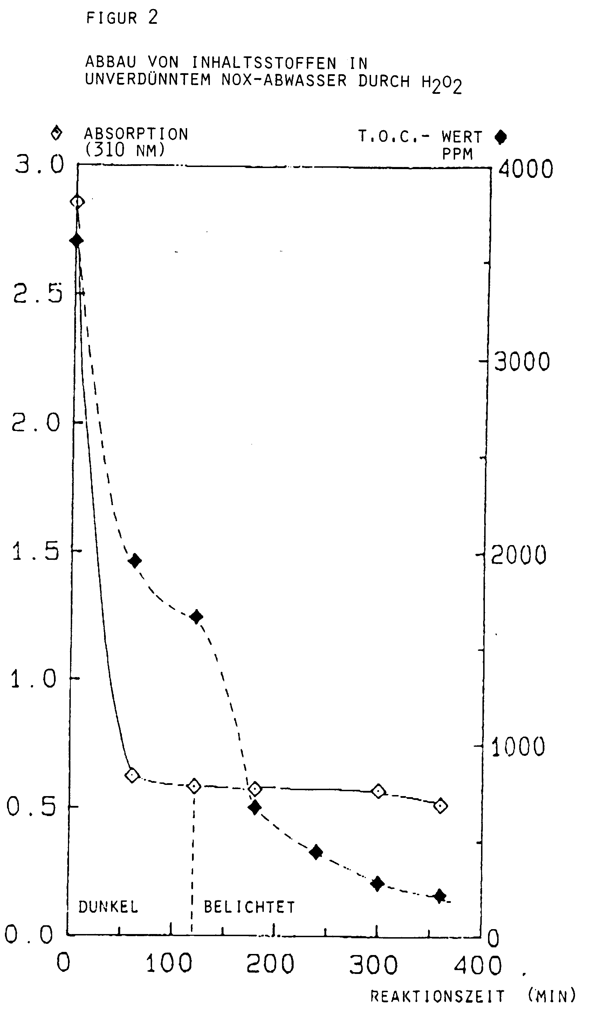

Eine Variante des in Figur 1 gezeigten Versuchs wird in Figur 2 dargestellt. Hier wurde analog Beispiel 2 die Dunkelphase auch in Abwesenheit von $TiO_2$ durchgeführt. Vor der Bestrahlung wurde, abgesehen von 10 g/l $TiO_2$ Pulver, nochmals 0,1 mol/l $H_2O_2$ zugesetzt. Durch den $H_2O_2$-Zusatz wurde der photokatalytische TOC-Abbau noch zusätzlich beschleunigt. Man erreicht TOC-Werte um 100 mg/l nach verhältnismässig kurzer Bestrahlzeit.

Vergleichsbeispiel 4

An Beispiel 2 anknüpfend wurden 100ml unverdünntes NOX-Abwasser mit einem TOC-Wert von ca. 4300 ppm im Photoreaktor innert Minuten auf 60°C gebracht und zu Beginn der ersten 3 Stunden, das heisst in 3 gleichen Schritten die Konzentration von 0,3 mol/l $H_2O_2$ und $5 \times 10^{-3}$ mol/l $Fe_2(SO_4)_3$ erreicht.

In einer Versuchsvariante wurde zusätzlich nach der 3. Stunde belichtet.

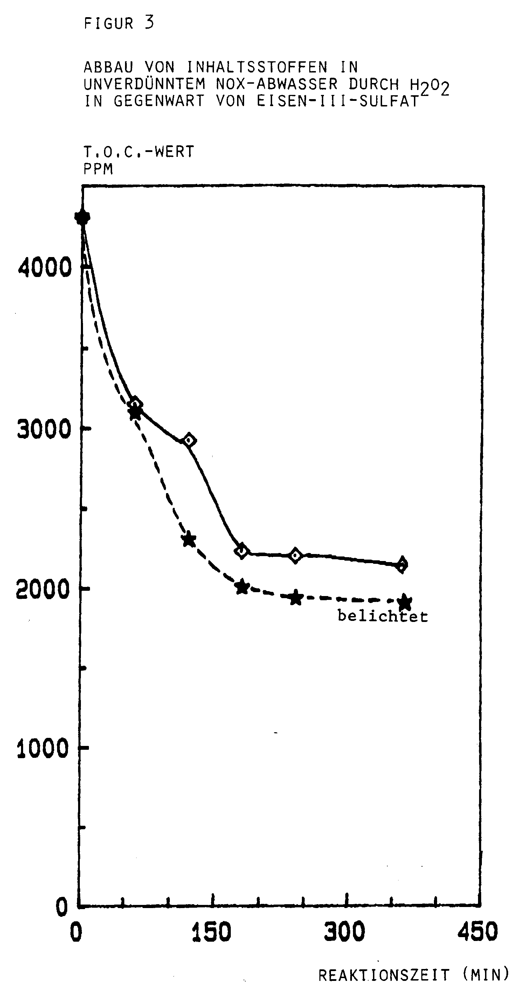

Figur 3 zeigt den Abfall des TOC-Wertes auf ca. 50% und für die nachfolgende Versuchsdauer bis 360 Minuten keine Verbesserung der Werte, wobei auch der Einfluss der zusätzlichen Belichtung unwesentlich blieb.

Dieses Beispiel entspricht der Lehre der Entgegenhaltungen des Standes der Technik und lässt eindeutig das Fehlen des erfindungsgemässen synergistischen Effekts durch $TiO_2$ erkennen.

Vergleichsbeispiel 5

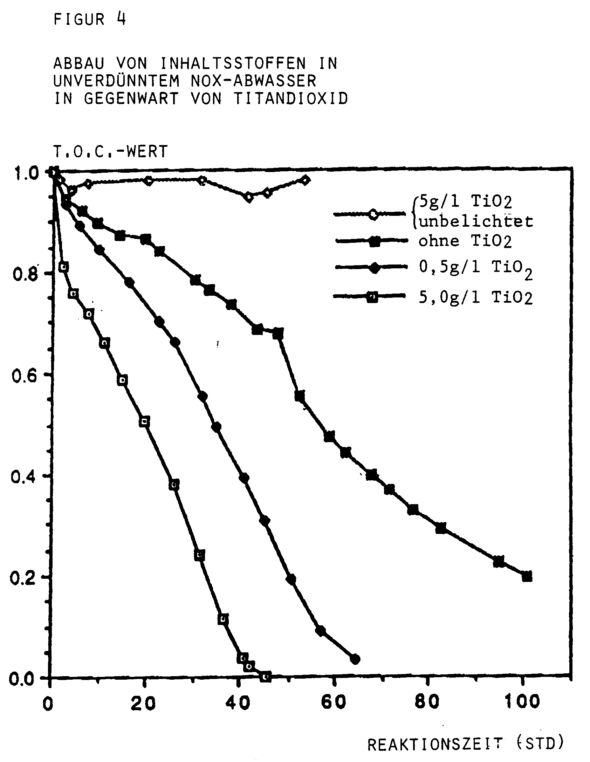

In einem Ansatz analog Beispiel 2 wurde Abwasser mit einem Anteil von ca. 3500 ppm in einer Versuchsreihe nach dem Stand der Technik ohne $H_2O_2$ mit steigender Menge an $TiO_2$ als Photokatalysator und UV-Licht behandelt, wobei Varianten ohne $TiO_2$ bzw. ohne Belichtung ergänzt wurden. Figur 4 zeigt, dass bei einer Menge von 5g/l $TiO_2$ für den Abbau auf 25% Rest-TOC etwa 30 Std. Behandlungszeit notwendig sind. Das ist etwa das 5-fache des Beispiel 2, in dem erfindungsgemäss ausser $TiO_2$ Eisen-III-Salz und $H_2O_2$ zur Anwendung kommen.

Versuche mit 10g/l $TiO_2$ ergaben keine besseren Resultate.

**Patentansprüche**

1. Verfahren zur katalytischen Oxidation von organischen Inhaltsstoffen in Abwasser durch Wasserstoffperoxid in Gegenwart von Eisen-III-Salzen, dadurch gekennzeichnet, dass die Oxidation unter Lichteinwirkung und in Gegenwart von Titandioxid bei Temperaturen unter 80°C durchgeführt wird.

2. Verfahren gemäss Anspruch 1, dadurch gekennzeichnet, dass als Eisen-III-Salz Eisen-III-Sulfat verwendet wird.

3. Verfahren gemäss einem der Ansprüche 1 oder 2, dadurch gekennzeichnet, dass die Eisensalze in Wasser in Konzentrationen von $0.1 \times 10^{-3}$ bis 1 Mol/l, bevorzugt $0.1 \times 10^{-2}$ bis $0.1 \times 10^{-1}$ Mol/l, eingesetzt werden.

4. Verfahren gemäss einem der Ansprüche 1 bis 3, dadurch gekennzeichnet, dass die Oxidation im Temperaturbereich zwischen 20 und 75°C, bevorzugt zwischen 45 und 60°C, durchgeführt wird.

5. Verfahren gemäss einem der Ansprüche 1 bis 4, dadurch gekennzeichnet, dass Wasserstoffperoxid in einer Konzentration von maximal 0.5 Mol/l, bevorzugt 0.3 Mol/l, eingesetzt wird, wobei die Zugabe vorzugsweise schrittweise in Mengen von 0.1 Mol/l erfolgt.

6. Verfahren gemäss einem der Ansprüche 1 bis 5, dadurch gekennzeichnet, dass Titandioxid in einer Menge von maximal 10 g/l eingesetzt wird.

7. Verfahren gemäss einer der Ansprüche 1 bis 6, dadurch gekennzeichnet, dass Titandioxid und Licht als kit-of-parts eingesetzt werden.

8. Verfahren gemäss einem der Ansprüche 1 bis 7, dadurch gekennzeichnet, dass Eisen-III-Salze und Titandioxid als kit-of-parts eingesetzt werden.

**Claims**

1. A process for the catalytic oxidation of organic components in waste water by means of hydrogen peroxide in the presence of iron (III) salts, characterised in that the oxidation is conducted under the influence of light at temperatures below 80°C.

2. A process according to claim 1, characterised in that the iron (III) salt is ferric sulphate.

3. A process according to one of claims 1 or 2, characterised in that the iron salts are introduced in water in concentrations of $0.1 \times 10^{-3}$ to 1 mol/l, preferably $0.1 \times 10^{-2}$ to $0.1 \times 10^{-1}$ mol/l.

4. A process according to one of claims 1 to 3, characterised in that the oxidation is conducted in the temperature range between 20 and 75°C, preferably between 45 and 60°C.

5. A process according to one of claims 1 to 4, characterised in that the hydrogen peroxide is introduced in a concentration of no more than 0.5 mol/l, preferably 0.3 mol/l, the addition being preferably conducted step-wise in amounts of 0.1 mol/l.

6. A process according to one of claims 1 to 5, characterised in that the titanium dioxide is introduced in an amount of no more than 10 g/l.

7. A process according to one of claims 1 to 6, characterised in that titanium dioxide and light are introduced as a kit-of-parts.

8. A process according to one of claims 1 to 7, characterised in that iron (III) salts and titanium dioxide are introduced as a kit-of-parts.

**Revendications**

1. Procédé d'oxydation catalytique de matières organiques contenues dans des eaux résiduaires par du peroxyde d'hydrogène, en présence de sels de fer-III, caractérisé en ce que l'oxydation est réalisée sous l'action de la lumière et en présence de dioxyde de titane, à des températures inférieures à 80°C.

2. Procédé conforme à la revendication 1, caractérisé en ce que l'on utilise du sulfate ferrique en tant que sel de fer-III.

3. Procédé conforme à l'une des revendications 1 et 2, caractérisé en ce que l'on introduit les sels de fer dans l'eau en des concentrations de $0,1.10^{-3}$ à 1 mole/litre, et de préférence de $0,1.10^{-2}$ à $0,1.10^{-1}$ mole/litre.

4. Procédé conforme à l'une des revendications 1 à 3, caractérisé en ce que l'on réalise l'oxydation dans le domaine de température situé entre 20°C et 75°C, et de préférence entre 45°C et 60°C.

5. Procédé conforme à l'une des revendications 1 à 4, caractérisé en ce que l'on introduit le peroxyde d'hydrogène en une concentration valant au maximum 0,5 mole/litre, et de préférence 0,3 mole/litre, cette addition étant avantageusement réalisée par étapes, par fractions de 0,1 mole/litre.

6. Procédé conforme à l'une des revendications 1 à 5, caractérisé en ce que l'on introduit le dioxyde de titane en une quantité valant au maximum 10 g/l.

7. Procédé conforme à l'une des revendications 1 à 6, caractérisé en ce que l'on introduit le dioxyde de titane et la lumière sous la forme d'un ensemble de pièces.

8. Procédé conforme à l'une des revendications 1 à 7, caractérisé en ce que l'on introduit le dioxyde de titane et le sel de fer-III sous la forme d'un ensemble de pièces.

FIGUR 1

ABBAU VON INHALTSSTOFFEN IN
UNVERDÜNNTEM NOX-ABWASSER DURCH H₂0₂

FIGUR 2

ABBAU VON INHALTSSTOFFEN IN
UNVERDÜNNTEM NOX-ABWASSER DURCH H₂O₂

FIGUR 3

ABBAU VON INHALTSSTOFFEN IN
UNVERDÜNNTEM NOX-ABWASSER DURCH $H_2O_2$
IN GEGENWART VON EISEN-III-SULFAT

T.O.C.-WERT
PPM

belichtet

REAKTIONSZEIT (MIN)

FIGUR 4

ABBAU VON INHALTSSTOFFEN IN
UNVERDÜNNTEM NOX-ABWASSER
IN GEGENWART VON TITANDIOXID

T.O.C.-WERT

REAKTIONSZEIT (STD)

Legend:
- 5g/l $TiO_2$ (unbelichtet)
- ohne $TiO_2$
- 0,5g/l $TiO_2$
- 5,0g/l $TiO_2$